# EUROPEAN PATENT SPECIFICATION

(11) **EP 1 984 680 B1**
(45) Date of publication and mention of the grant of the patent: **23.09.2015**
(21) Application number: 07708946.4
(22) Date of filing: 15.02.2007
(51) Int. Cl.: F24F 11/00, F24F 11/06, F25B 1/10, F25B 13/00

(54) **AIR-CONDITIONING SYSTEM AND CONTROLLING METHOD FOR THE SAME**
KLIMAANLAGENSYSTEM UND STEUERVERFAHREN DAFÜR
SYSTÈME DE CONDITIONNEMENT D'AIR ET SON PROCÉDÉ DE COMMANDE

(30) Priority: 15.02.2006 KR 20060014755; 15.02.2006 KR 20060014754; 15.02.2006 KR 20060014753; 08.01.2007 KR 20070002122
(43) Date of publication of application: 29.10.2008
(73) Proprietor: LG Electronics Inc., Seoul 150-721 (KR)
(72) Inventor: LEE, Hyuk Soo, DAC Research Institute, LG Electronics, Gyeongsangnam-Do, 641-110 (KR); KO, Young Hwan, Gyeongsangnam-do, 641-932 (KR); KIM, Byung Soon, Gyeongsangnam-do, 641-913 (KR)
(74) Representative: Boult Wade Tennant
(86) International application number: PCT/KR2007/000796
(87) International publication number: WO 2007/094618

(56) References cited:
- EP-A1- 0 485 146
- EP-A2- 1 628 088
- EP-A2- 1 969 291
- JP-A- 11 063 694
- US-A- 5 134 859
- US-A- 5 655 379
- US-A1- 2005 132 729
- US-A1- 2006 032 267

## Description

The present invention relates to an air-conditioning system, and more particularly, to an air-conditioning system and a controlling method for the same that is capable of improving the operational efficiency of the air-conditioning system.

### Background Art

Generally, an air-conditioning system is a system that compresses, condenses, expands, and evaporates a refrigerant to cool and/or heat the interior of a room.

The air-conditioning system may be classified as a normal air-conditioning system constructed in a structure in which a single indoor unit is connected to an outdoor unit and a multi air-conditioning system constructed in a structure in which a plurality of indoor units are connected to an outdoor unit. Also, the air-conditioning system may be classified as a cooling system constructed in a structure in which a refrigerant cycle is operated only in one direction to supply cool air into the interior of a room and a cooling and heating system constructed in a structure in which a refrigerant cycle is selectively operated in opposite directions to supply cool air or warm air into the interior of a room.

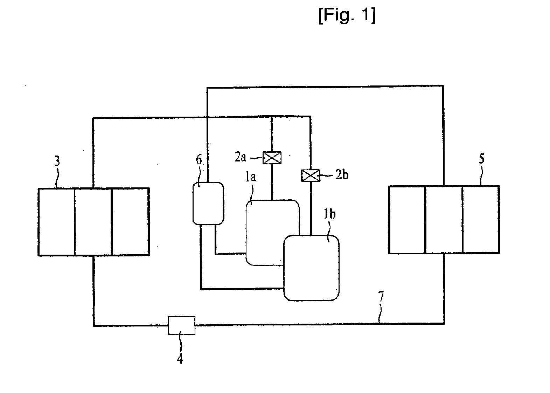

The construction of a conventional separation type air-conditioning system will be described in brief with reference to FIG. 1.

The conventional air-conditioning system fundamentally forms a refrigeration cycle including compressors 1a and 1b, a condenser 3, an expansion valve 4, and an evaporator 5. These components are connected to each other via a connection pipe 7 serving as a flow channel through which a refrigerant flows.

The operation of the air-conditioning system to cool the interior of a room will be described below based on the flow of the refrigerant.

A gas-phase refrigerant heat-exchanged with indoor air in the evaporator 5 is introduced into the compressors 1a and 1b. The gas-phase refrigerant introduced into the compressors 1a and 1b are compressed into high temperature and high pressure by the compressors 1a and 1b. After that, the gas-phase refrigerant is introduced into the condenser 3 where the gas-phase refrigerant is phase-changed into a liquid-phase refrigerant. As the refrigerant is phase-changed in the condenser 3, heat is emitted from the condenser 3.

Subsequently, the refrigerant is discharged from the condenser, passes through the expansion valve 4 where the refrigerant is expanded, and is introduced into the evaporator 5. The liquid-phase refrigerant introduced into the evaporator 5 is phase-changed into a gas-phase refrigerant. As the refrigerant is phase-changed in the evaporator 5, the refrigerant absorbs external heat, thereby cooling the interior of the room. Of course, the refrigeration cycle may be operated in the opposite direction to heat the interior of the room.

On the other hand, an accumulator 6 is mounted between the evaporator 5 and the compressors 1a and 1b. A mixture of oil and refrigerant is temporarily stored in the accumulator 6. Also, the accumulator 6 serves to prevent the backward-flow of the refrigerant and the introduction of the liquid-phase refrigerant into the compressors 1a and 1b.

The compressors 1a and 1b include a first compressor 1a and a second compressor 1b individually connected to the accumulator 6. The first and second compressors 1a and 1b have the different capacities. Constant-speed compressors, which are operated at a constant operating speed, are used as the first and second compressors 1a and 1b. Consequently, one corresponding compressor is operated according to load required in the air-conditioning system. Before the refrigerant is introduced into the first compressor 1a, the flow of the refrigerant is controlled by a first check valve 2a. Before the refrigerant is introduced into the second compressor 1b, the flow of the refrigerant is controlled by means of a second check valve 2b.

### Disclosure of Invention

### Technical Problem

In the conventional air-conditioning system, however, uniform compression work is supplied to the compressors even when the required load is changed with the result that electric power is unnecessarily consumed and the operational efficiency of the air-conditioning system is decreased.

Also, the two compressors are individually mounted in the conventional air-conditioning system, and therefore, drive units for driving the two compressors are also mounted in the conventional air-conditioning system with the result that an installation space is restricted. Furthermore, the manufacturing costs of the air-conditioning system increase.

In addition, the operating range of the conventional air-conditioning system is determined only by the capacities of the respective compressors with the result that the operating range is restricted.

Furthermore, the liquid-phase refrigerant may be introduced into the compressors when the operation of the conventional air-conditioning system is initiated. When the liquid-phase refrigerant is introduced into the compressors, however, excessive load is applied to the compressors with the result that the reliability of the compressors abruptly is decreased.

US-A-5655379 describes an air-conditioning system including a phase separator and a first and second expansion device. A thermistor is disposed within the phase separator in order to monitor the state of the refrigerant.

### Technical Solution

An object of the present invention devised to solve the problem lies on an air-conditioning system and a controlling method for the same that is capable of improving the operational efficiency of the air-conditioning system.

Another object of the present invention devised to solve the problem lies on an air-conditioning system and a controlling method for the same that is capable of reducing compression work applied to a compressor and preventing the introduction of a liquid-phase refrigerant into the compressor.

Another object of the present invention devised to solve the problem lies on an air-conditioning system and a controlling method for the same that is capable of extending the operating range of the air-conditioning system.

A further object of the present invention devised to solve the problem lies on an air-conditioning system and a controlling method for the same that is capable of easily performing the operation of the air-conditioning system and reducing the manufacturing costs of the air-conditioning system.

The object of the present invention can be achieved by providing an air-conditioning system including a phase separator for separating a flowing refrigerant into a gas-phase refrigerant and a liquid-phase refrigerant, an evaporator for evaporating the liquid-phase refrigerant separated by the phase separator, a compressor having a first compression part into which the refrigerant having passed through the evaporator is introduced and a second compression part into which both the gas-phase refrigerant separated by the phase separator and the refrigerant having passed through the first compression part are introduced, and a control unit for simultaneously or selectively controlling the amount of the refrigerant introduced into the phase separator and the amount of the refrigerant discharged from the phase separator.

Preferably, the air-conditioning system further includes a first expansion valve for controlling the amount of the refrigerant introduced into the phase separator, a second expansion valve for controlling the amount of the liquid-phase refrigerant discharged from the phase separator and introduced into the evaporator, and a refrigerant control valve for controlling the amount of the gas-phase refrigerant discharged from the phase separator and introduced into the second compression part.

Preferably, the control unit controls the amount of the gas-phase refrigerant introduced into the second compression part depending upon operation load of the system.

Specifically, the control unit controls the opening amount of the refrigerant control valve based on a frequency of the compressor determined depending upon the operation load of the system.

Preferably, the operation load of the system is determined depending upon factors including operation mode set by a user.

Preferably, the operation load of the system is determined depending upon factors including outdoor temperature and indoor temperature.

Preferably, the air-conditioning system further includes a temperature sensor for measuring the outdoor temperature and the indoor temperature.

Preferably, the air-conditioning system further includes a measuring sensor for measuring data related to the state of the refrigerant.

Preferably, the measuring sensor is mounted on a first refrigerant pipe through which the gas-phase refrigerant separated by the phase separator flows.

Preferably, the measuring sensor is a temperature sensor for measuring the temperature of the gas-phase refrigerant.

Preferably, the measuring sensor is a pressure sensor mounted in at least one of a first refrigerant pipe, a second refrigerant pipe, and a mixed refrigerant pipe connected to the phase separator.

Preferably, the control unit converts the pressure data measured by the pressure sensor into temperature data corresponding to the pressure data.

Preferably, the control unit controls the valves based on data related to the state of the refrigerant set depending upon the outdoor temperature and the data measured by the measuring sensor.

Preferably, the measuring sensor includes a pressure sensor and/or a temperature sensor, and the measuring sensor is mounted at an outlet port of the compressor.

Preferably, the control unit closes all the valves to prevent the introduction of the liquid-phase refrigerant into the compressor when the operation of the air-conditioning system is initiated.

In another aspect of the present invention, provided herein is a controlling method for an air-conditioning system including detecting data necessary for the operation of the system, and simultaneously or selectively controlling the amount of refrigerant introduced into a phase separator and the amount of refrigerant discharged from the phase separator based on the detected data.

Preferably, the data includes operation load of the system, and the controlling method further includes determining an operation frequency of a compressor corresponding to the operation load of the system, and operating the compressor at the determined operation frequency.

Preferably, the step of controlling the amount of refrigerant includes setting the opening amount of a refrigerant control valve depending upon the operation frequency of the compressor, and controlling the refrigerant control valve depending upon the set opening amount.

Preferably, the controlling method further includes changing operation mode of the air-conditioning system, and resetting the opening amount of the refrigerant control valve depending upon the changed operation mode of the air-conditioning system.

Preferably, the data includes data related to the state of the refrigerant, and the controlling method further includes comparing the measured data with data related to the state of the refrigerant previously set depending upon outdoor temperature, and controlling valves mounted on refrigerant pipes connected to the phase separator based on the measured data and the set data.

Preferably, the data includes the temperature of the refrigerant, and the step of controlling the valves includes, when the temperature of the refrigerant does not exceed a first predetermined temperature previously stored in the control unit, closing a refrigerant control valve through which a gas-phase refrigerant is discharged from the phase separator, and opening a first expansion valve through which the refrigerant is introduced into the phase separator and a second expansion valve through which a liquid-phase refrigerant is discharged from the phase separator and introduced into an evaporator by predetermined opening degrees, respectively.

Preferably, the step of controlling the valves includes, when the temperature of the refrigerant exceeds a second predetermined temperature previously stored in the control unit, resetting the opening degrees of the refrigerant control valve, the first expansion valve, and the second expansion valve to be the opening degrees just before the valves are controlled.

Preferably, the step of controlling the amount of refrigerant includes controlling a first expansion valve mounted on a mixed refrigerant pipe through which the refrigerant is introduced into the phase separator, controlling a refrigerant control valve mounted on a first refrigerant pipe through which a gas-phase refrigerant separated by the phase separator flows, and controlling a second expansion valve mounted on a second refrigerant pipe through which a liquid-phase refrigerant separated by the phase separator flows to an evaporator.

Preferably, all the valves are closed to prevent the introduction of the liquid-phase refrigerant into the compressor when the operation of the air-conditioning system is initiated.

Preferably, the first expansion valve and the second expansion valve are opened to predetermined opening degrees, respectively, until the measured data is within a range of reference data of the stabilized system after all the valves are closed.

Preferably, when the measured data is within the range of reference data, the refrigerant control valve is opened to a predetermined opening degree.

Preferably, after the refrigerant control valve is opened to the predetermined opening degree, the opening degrees of the first expansion valve, the second expansion valve, and the refrigerant control valve are controlled depending upon outdoor temperature.

### Advantageous Effects

The air-conditioning system according to the present invention and the controlling method for the same have the following effects.

First, the opening amount of the refrigerant control valve is controlled depending upon the operation load of the air-conditioning system. Consequently, the air-conditioning system is efficiently operated. Specifically, in an air-conditioning system constructed in a structure in which a first compression part and a second compression part having variable capacities are mounted in a single compressor, a gas-phase refrigerant is optimally supplied to the second compression part depending upon the operation load of the air-conditioning system. Consequently, the air-conditioning system is efficiently operated.

Especially, the operation frequency of the compressor is determined depending upon the operation load of the air-conditioning system, and the opening amount of the refrigerant control valve is controlled depending upon the operation frequency of the compressor. Consequently, it is possible to reduce the compression work, and, at the same time, accomplishing the maximum heating and cooling efficiencies.

Second, the gas-phase refrigerant separated by the phase separator is supplied to the second compression part. Consequently, the compression work applied to the compressor is reduced. Furthermore, the structure of the phase separator is improved to prevent the introduction of the liquid-phase refrigerant into the compressor. Consequently, the reliability of the compressor is increased.

Third, the valves are controlled, when the operation of the air-conditioning system is initiated or abrupt change of the pressure occurs, to prevent the introduction of the liquid-phase refrigerant into the compressor from the phase separator. Consequently, the breakdown of the compressor is prevented.

### Brief Description of the Drawings

The accompanying drawings, which are included to provide a further understanding of the invention, illustrate embodiments of the invention and together with the description serve to explain the principle of the invention.

In the drawings:
FIG. 1 is a view schematically illustrating the construction of a conventional air-conditioning system.
FIG. 2 is a view schematically illustrating the construction of an air-conditioning system according to the present invention.
FIG. 3 is a graph illustrating a refrigeration cycle of the air-conditioning system shown in FIG. 2.
FIG. 4 is a longitudinal sectional view schematically illustrating a compressor mounted in the air-conditioning system shown in FIG. 2.
FIG. 5 is a longitudinal sectional view schematically illustrating a phase separator mounted in the air-conditioning system shown in FIG. 2.
FIG. 6 is a graph illustrating the operation of the compressor in the air-conditioning system shown in FIG. 2 depending upon external load.
FIG. 7 is a graph illustrating the operational efficiency of compressor shown in FIG. 4.
FIG. 8 is a block diagram illustrating a process for controlling the air-conditioning system shown in FIG. 2.
FIG. 9 is a flow chart illustrating an embodiment of controlling method for an air-conditioning system according to the present invention.
FIG. 10 is a graph illustrating the performance of the air-conditioning system depending upon the opening degree of a refrigerant control pipe provided at the air-conditioning system according to the present invention.
FIG. 11 is a flow chart illustrating another embodiment of controlling method for an air-conditioning system according to the present invention.
FIG. 12 is a flow chart illustrating a further embodiment of controlling method for an air-conditioning system according to the present invention.

### Mode for the Invention

Reference will now be made in detail to the preferred embodiments of the present invention, examples of which are illustrated in the accompanying drawings.

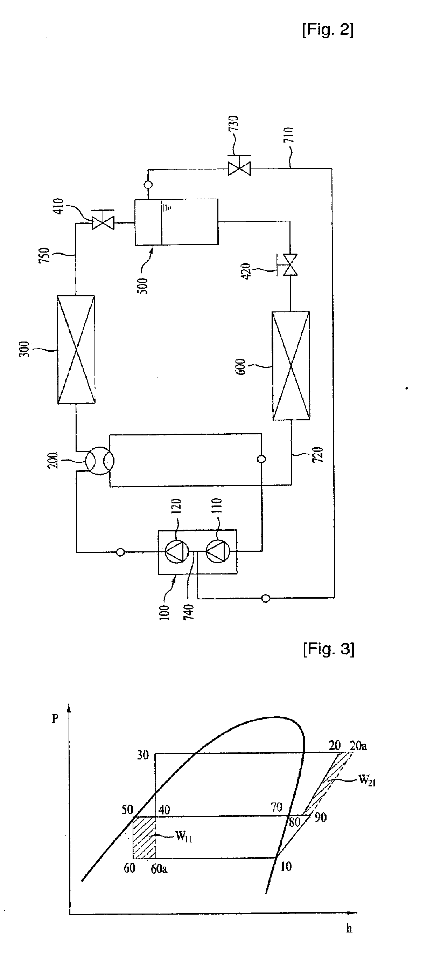

First, the construction of an air-conditioning system according to the present invention will be described in detail with reference to FIG. 2.

The air-conditioning system includes an evaporator 600, a condenser 300, expansion valves 410 and 420, a compressor 100, and a phase separator 500 for separating a refrigerant introduced therein into a gas-phase refrigerant and a liquid-phase refrigerant. In addition, the air-conditioning system further includes a four-way valve 200 for controlling the flow of the refrigerant supplied to the condenser 300, the compressor 100, and the evaporator 600. Hereinafter, the air-conditioning system will be described based on the flow of the refrigerant when the cooling operation is performed to cool the interior of a room.

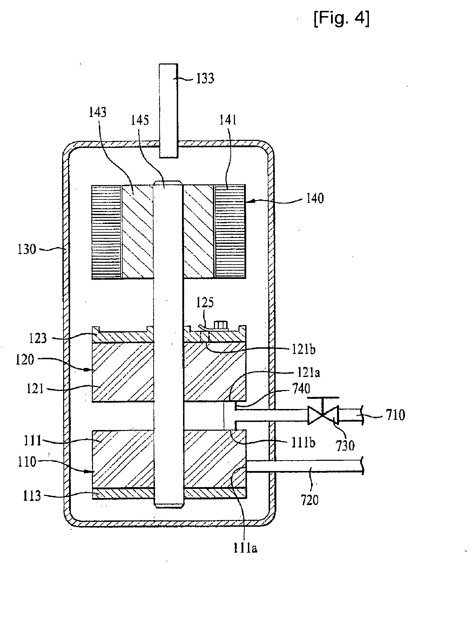

Specifically, a first compression part 110 includes a first cylinder 111 (see FIG. 4) into which the refrigerant having passed through the evaporator 600 is introduced, and a second compression part 120 includes a second cylinder 121 (see FIG. 4) having a volume different than that of the first cylinder 111.

Between the phase separator 500 and the compressor 100 is mounted a refrigerant introduction unit for guiding the refrigerant to the first compression part 110 and the second compression part 120.

The refrigerant introduction unit may include an intermediate refrigerant pipe 740 connected between the first compression part 110 and the second compression part 120, a first refrigerant pipe 710 connected between the intermediate refrigerant pipe 740 and the phase separator 500, and a second refrigerant pipe 720 connected between the first compression part 110 and the phase separator 500. Also, the refrigerant introduction unit may include a refrigerant control valve 730 mounted on the first refrigerant pipe 710 for controlling the flow of a gas-phase refrigerant introduced into the second compression part 120.

The expansion valves 410 and 420 includes a first expansion valve 410 for primarily expanding the refrigerant having passed through the condenser 300 and a second expansion valve 420 for expanding a liquid-phase refrigerant separated by the phase separator 500. The refrigerant having passed through the condenser 300 is excessively cooled. As the refrigerant passes through the first expansion valve 410, the refrigerant expands and is introduced into the phase separator 500 while a gas-phase refrigerant and a liquid-phase refrigerant are mixed with each other.

The phase separator 500 is mounted between the first expansion valve 410 and the second expansion valve 420 for separating the gas-phase refrigerant and the liquid-phase refrigerant from each other. The phase separator 500 is connected to a mixed refrigerant pipe 750 through which the refrigerant having passed through the condenser 300 flows. Also, the phase separator 500 is connected to the first refrigerant pipe 710 through which the gas-phase refrigerant separated by the phase separator 500 flows and to the second refrigerant pipe 720 through which the liquid-phase refrigerant separated by the phase separator 500 flows.

As the liquid-phase refrigerant separated by the phase separator 500 passes through the second expansion valve 420, the liquid-phase refrigerant expands. The liquid-phase refrigerant having passed through the second expansion valve 420 is introduced into the evaporator 600 where the liquid-phase refrigerant is phased-changed into a gas-phase refrigerant. After that, the gas-phase refrigerant having passed through the evaporator 600 is introduced into the compressor, i.e., the first compression part 110, through the four-way valve 200.

The gas-phase refrigerant separated by the phase separator 500 flows through the first refrigerant pipe 710 and is mixed with the refrigerant having passed through the first compression part 110 in the intermediate refrigerant pipe 740. The refrigerants mixed in the intermediate refrigerant pipe 740 are introduced into the second compression part 120 where the refrigerants are compressed. The compressed refrigerants are discharged out of the compressor.

The phase separator 500 is not particularly restricted so long as the phase separator 500 can separate the gas-phase refrigerant from the refrigerant having passed through the condenser. For example, the phase separator 500 may include a heat exchanger, by which heat exchange between the refrigerant having passed through the condenser and external air is performed to obtain a gas-phase refrigerant from the refrigerant.

The refrigerant control valve 730 is controlled by a control unit (not shown) for controlling the operation of the air-conditioning system. The control unit serves to drive the first compression part 110 and the second compression part 120. Also, the control unit serves to control the refrigerant control valve 730.

On the first refrigerant pipe 710 may be mounted a capillary tube for controlling the flow rate of the gas-phase refrigerant introduced into the intermediate refrigerant pipe 740. Specifically, it is possible to control the amount of the gas-phase refrigerant introduced into the intermediate refrigerant pipe 740 by controlling the inner diameter of the first refrigerant pipe 710.

Since both the gas-phase refrigerant separated by the phase separator 500 and the refrigerant compressed by the first compression part 110 are compressed in the second compression part 120, compression work applied to the compressor 100 is decreased. As the compression work of the compressor 100 is decreased, the operating range of the compressor 100 is extended with the result that the air-conditioning system may be used even in severely cold regions or tropical regions.

The present invention is not limited to the above-described embodiment. When the operation of the air-conditioning system is initiated or the reliability of the air-conditioning system is confirmed, for example, the refrigerant control valve may be closed to prevent the introduction of the gas-phase refrigerant into the second compression part.

Also, the air-conditioning system may be constructed such that the compressor is operated while the refrigerant control valve is closed even in a region where external load is low. When the external load is within a predetermined load range, for example, the control unit closes the refrigerant control valve 730 so as to drive only the first compression part. As a result, the gas-phase refrigerant separated by the phase separator 500 is not introduced into the second compression part 120 any more. Consequently, the phase separator 500 serves as a receiver.

Of course, it is possible to operate only the second compression part or both the first and second compression parts while the gas-phase refrigerant separated by the phase separator is not supplied into the intermediate refrigerant pipe, i.e., the refrigerant control valve is closed.

Hereinafter, the pressure-enthalpy conversion of the air-conditioning system according to the present invention will be described with reference to FIGs. 2 and 3.

In a general air-conditioning system, a refrigeration cycle includes a compressing process 10 → 20a, a condensing process 20a → 30, an expanding process 30 → 60a, and an evaporating process 60a → 10. However, the refrigeration cycle of the air-conditioning system according to this embodiment includes a compressing process 10 → 90 → 80 → 20, a condensing process 20 → 30, an expanding process 30 → 40 → 50 → 60, and an evaporating process 60 → 10.

In this embodiment, the compressing process includes a first compressing process 10 → 90 and a second compressing process 80 → 20. The first compressing process is a compressing process carried out in the first compression part 110, and the second compressing process is a compressing process carried out in the second compression part 120.

The reason why the start point of the second compressing process is shifted from Point 90 to Point 80 is that the gas-phase refrigerant separated by the phase separator 500 is introduced into the second compression part 120 through the intermediate refrigerant pipe 740. That is, the gas-phase refrigerant separated by the phase separator 500 is mixed with the refrigerant having passed through the first compression part 110, and is then introduced into the second compression part 120 to decrease the enthalpy of the entire refrigerant.

Specifically, the gas-phase refrigerant separated by the phase separator 500 is mixed with the refrigerant compressed by the first compression part 110, and is then supplied to the second compression part 120, whereby the compression work required in the compressor is reduced by W21, and therefore, the total energy efficiency of the air-conditioning system is increased.

Also, in this embodiment, the expanding process includes a first expanding process 30 → 40 and a second expanding process 50 → 60. The first expanding process is an expanding process carried out in the first expansion valve 410, and the second expanding process is an expanding process carried out in the second expansion valve 420.

The reason why the start point of the second expanding process is shifted from Point 40 to Point 50, i.e., work is gained by W11, is that only the gas-phase refrigerant is separated from the refrigerant introduced into the phase separator 500, and then flows through the first refrigerant pipe 710. That is, the gas-phase refrigerant is discharged from the phase separator, whereby the enthalpy of the refrigerant introduced into the evaporator is reduced. As a result, the heat exchange efficiency of the evaporator 600 is increased, and therefore, the cooling efficiency of the air-conditioning system is improved.

Also, the gas-phase refrigerant separated by the phase separator 500 as well as the refrigerant having passed through the evaporator 600 is supplied into the compressor 100. Consequently, the circulating amount of the refrigerant is increased with the result that the capacity of the compressor 100 is increased, and therefore, the efficiency of the air-conditioning system is greatly improved.

The present invention is not limited to the above-described embodiment. For example, a heat exchanger may be mounted between the first refrigerant pipe and the second refrigerant pipe for performing heat exchange between the gas-phase refrigerant separated by the phase separator 500 and the refrigerant having passed through the evaporator 600, whereby the enthalpy of the refrigerant introduced into the compressor is further decreased. As a result, the compression work required in the compressor is further reduced.

Hereinafter, the compressor according to the present invention and the refrigerant introduction unit for guiding the refrigerant to the compressor will be described with reference to FIG. 4.

The compressor includes a case 130 forming the appearance of the compressor, a drive unit 140 mounted in the case 130, and a first compression part 110 and a second compression part 120 driven by the drive unit 140.

The drive unit 140 includes a stator 141 having a winding coil and a rotor 143 rotatably mounted in the stator 141. A rotary shaft 145 is fitted in the rotor 143. The rotary shaft 145 is connected to the first compression part 110 and the second compression part 120.

The first compression part 110 and the second compression part 120 have compression capacities variable depending upon external load. The first compression part 110 and the second compression part 120 are mounted in a single compressor. The first compression part 110 is mounted in the lower end of the case 130, and the second compression part 120 is mounted above the first compression part 110. Of course, an intermediate plate may be mounted between the first compression part 110 and the second compression part 120 for separating the first compression part 110 and the second compression part 120 from each other.

The first compression part 110 includes a first cylinder 111 having a refrigerant compression space defined therein and a first bearing 113 mounted at the bottom of the first cylinder 111. The second compression part 120 includes a second cylinder 121 having a refrigerant compression space defined therein and a second bearing 123 mounted at the top of the second cylinder 111. Of course, the first bearing 113 may be mounted at the top of the first cylinder 111, and second bearing 123 may be mounted at the bottom of the second cylinder 111.

The first cylinder 111 is provided at one side thereof with a first cylinder inlet port 111 a through which the refrigerant, having passed through the evaporator, is introduced into the first cylinder 111. The first cylinder 111 is provided at the other side thereof with a first cylinder outlet port 111b through which the refrigerant compressed in the first cylinder 111 is discharged. Of course, a first opening and closing valve may be mounted in the first cylinder outlet port 111b for opening and closing the first cylinder outlet port 111 b.

The second cylinder 121 is provided at one side thereof with a second cylinder inlet port 121a through which the refrigerant compressed by the first compression part 110 and the gas-phase refrigerant separated by the phase separator are introduced into the second cylinder 121. The second cylinder 121 is provided at the other side thereof with a second cylinder outlet port 121b through which the refrigerant compressed in the second cylinder 121 is discharged. Also, a second opening and closing valve 125 is mounted in the second cylinder outlet port 121b for opening and closing the second cylinder outlet port 121b.

Of course, a multi-stage compressor, including three or more compression units, may be used as the compressor. Specifically, it is possible to provide one or more compression units which use the gas-phase refrigerant separated by the phase separator.

On the other hand, the refrigerant introduced into the first compression part and the second compression part is controlled by the refrigerant introduction unit. The refrigerant control valve 730 is mounted on the first refrigerant pipe 710 for controlling the flow of the gas-phase refrigerant flowing through the first refrigerant pipe 710. The first refrigerant pipe 710 is connected to the intermediate refrigerant pipe 740. The intermediate refrigerant pipe 740 communicates with the second cylinder outlet port 121b. Also, the intermediate refrigerant pipe 740 communicates with the first cylinder outlet port 111b. Consequently, the refrigerant compressed in the first cylinder and the gas-phase refrigerant separated by the phase separator are introduced into the second cylinder 121 where the refrigerants are compressed.

Of course, the refrigerant compressed in the first cylinder and the gas-phase refrigerant separated by the phase separator may be introduced individually into the second cylinder 121. Specifically, the intermediate refrigerant pipe 740 may directly communicate with the second cylinder 121, and the first cylinder outlet port 111b may directly communicate with the second cylinder 121, whereby the refrigerants are individually introduced into the second cylinder 121.

Hereinafter, the operation of the air-conditioning system using the compressor with the above-stated construction will be described.

When the operation of the air-conditioning system is initiated, the compressor 100 having the first compression part 110 and the second compression part 120, the condenser 300, the phase separator 500, the expansion valves 410 and 420, and the evaporator 600 are driven.

First, the phase separator 500 separates the refrigerant into a gas-phase refrigerant and a liquid-phase refrigerant.

The liquid-phase refrigerant separated by the phase separator 500 is introduced into the evaporator 600, and the gas-phase refrigerant separated by the phase separator 500 is introduced into the intermediate refrigerant pipe 740 connected to the compressor 100. The control unit simultaneously drives the first compression part 110 and the second compression part 120 and opens the refrigerant control valve 730 such that the gas-phase refrigerant separated by the phase separator 500 is introduced into the intermediate refrigerant pipe 740.

The liquid-phase refrigerant introduced into the evaporator 600 is phase-changed into a gas-phase refrigerant while the liquid-phase refrigerant passes through the evaporator 600. The gas-phase refrigerant is expanded while the gas-phase refrigerant passes through the second expansion valve 420. The gas-phase refrigerant having passed through the second expansion valve 420 is introduced into the first compression part 110 of the compressor 100.

The refrigerant compressed in the first compression part 110 is introduced into the intermediate refrigerant pipe 740. The refrigerants mixed in the intermediate refrigerant pipe 740 are introduced into the second compression part 120 of the compressor 100 where the refrigerants are compressed.

Specifically, the refrigerant having passed through the evaporator is introduced into the first cylinder 111 through the first cylinder inlet port 111a, and is then compressed in the first cylinder 111. The refrigerant compressed in the first cylinder 111 is introduced into the intermediate refrigerant pipe 740 through the first cylinder outlet port 111b.

As a result, the gas-phase refrigerant separated by the phase separator 500 and the refrigerant compressed by the first compression part 110 are mixed with each other in the intermediate refrigerant pipe 740. The mixed refrigerants are introduced into the second cylinder 121 through the second cylinder inlet port 121a, and are then compressed in the second cylinder 121. After that, the refrigerants are discharged out of the second cylinder 121 through the second cylinder outlet port 121b, and are then introduced into the condenser through a compressor discharge pipe 133 provided at the case 130.

The first cylinder 111 and the second cylinder 121 have different volumes. Also, the first cylinder 111 and the second cylinder 121 have different compressibilities. Specifically, on the assumption that the volume of the first cylinder 111 is 100, the volume of the second cylinder 121 is 40 to 80.

Of course, the compressor may be operated while the gas-phase refrigerant is not introduced into the intermediate refrigerant pipe. Specifically, the refrigerant having passed through the phase separator is introduced into one side of the first compression part, i.e., the first cylinder inlet port 111a, through the evaporator, and is then compressed in the first cylinder 111 by the operation of the drive unit.

The compressed refrigerant is introduced into the intermediate refrigerant pipe 740 through the first cylinder outlet port 111b. The refrigerant introduced into the intermediate refrigerant pipe 740 is introduced into the second cylinder 121. However, the refrigerant may be compressed or not in the second cylinder 121. Whether to compress the refrigerant in the second cylinder 121 may be determined depending upon a load range.

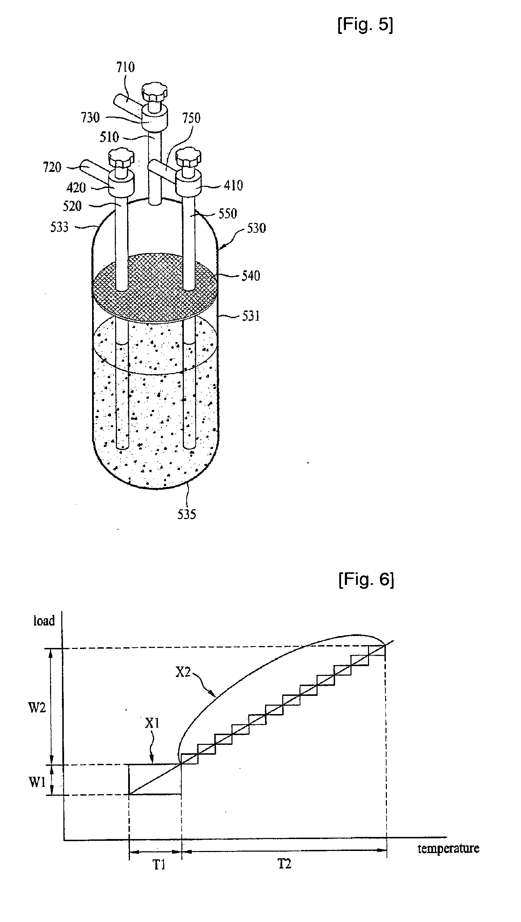

Hereinafter, the structure of the phase separator according to the present invention will be described with reference to FIG. 5.

The phase separator includes a storage container 530 for storing a refrigerant, a mixed refrigerant pipe connection part 550 for guiding the refrigerant to the storage container 530, a separation plate 540 mounted in the storage container 530, a first refrigerant pipe connection part 510 through which a gas-phase refrigerant separated from the refrigerant stored in the storage container 530 is discharged out of the storage container 530, and a second refrigerant pipe connection part 520 through which a liquid-phase refrigerant separated from the refrigerant stored in the storage container 530 is discharged out of the storage container 530.

The storage container 530 provides a space for temporarily storing the refrigerant. Specifically, a mixture of a gas-phase refrigerant and a liquid-phase refrigerant is introduced into the storage container 530.

The storage container 530 includes a cylindrical container body 531, a top wall 533 formed at the upper end of the container body 531, and a bottom wall 535 formed at the lower end of the container body 531.

The mixed refrigerant pipe connection part 550 and the second refrigerant pipe connection part 520 extend downward through the top wall 533 while the mixed refrigerant pipe connection part 550 and the second refrigerant pipe connection part 520 are spaced a predetermined distance from the bottom wall 535.

The separation plate 540 serves to separate the refrigerant introduced into the storage container into a liquid-phase refrigerant and a gas-phase refrigerant. The separation plate 540 is mounted below the top wall 533. Consequently, when the refrigerant is introduced into the storage container 530 through the mixed refrigerant pipe connection part 550, the gas-phase refrigerant component of the refrigerant passes through the separation plate 540, and is then supplied to the compressor through the first refrigerant pipe connection part 510.

On the other hand, the liquid-phase refrigerant component of the refrigerant collides with the separation plate 540 with the result that the liquid-phase refrigerant component falls downward from the separation plate 540. After that, the liquid-phase refrigerant, stored in the storage container below the separation plate 540, is discharged through the second refrigerant pipe connection part 520, and is then introduced into the second expansion valve 420.

When external load is large, i.e., in severely cold regions or tropical regions, the air-conditioning system has a refrigerant flow in which the gas-phase refrigerant separated by the phase separator is introduced into the second compression part 120 while the gas-phase refrigerant separated by the phase separator is mixed with the refrigerant having passed through the first compression part 110. Of course, when the external load is small, either the first compression part or the second compression part may be operated.

Generally, principal factors to determine the efficiency of the compressor are the capacity of the compressor and energy consumption rate. Here, the capacity of the compressor is determined, during the manufacture of the compressor, such that the compressor is suitable for a corresponding air-conditioning system. Consequently, although the compressor has the same capacity as a conventional compressor, it is necessary to reduce energy consumption such that the operating range of the air-conditioning system is extended.

In the air-conditioning system according to the present invention, the gas-phase refrigerant is supplied to the second compression part 120 together with the refrigerant compressed by the first compression part 110. Consequently, compression work applied to the compressor is decreased, and therefore, energy consumption is decreased, whereby the total efficiency of the air-conditioning system is increased although the air-conditioning system has the same output as a conventional air-conditioning system. As a result, the operating range of the air-conditioning system is further extended although the compressor has the same capacity as a conventional compressor.

Hereinafter, the operation of the compressor in the air-conditioning system according to the present invention will be described with reference to FIGs. 2 and 6.

In a cooling operation to cool the interior of a room, compression work to be applied to the compressor from the outside, i.e., external load, is proportional to outdoor temperature. However, the external load does not mean only a function of the outdoor temperature. The external load may be determined in consideration of the number of indoor units in operation, indoor temperature, and a predetermined temperature. However, the operation of the compressor will be described hereinafter on the consumption that the external load includes only the outdoor temperature.

For example, when the outdoor temperature is low, the necessity for cooling the interior of the room is reduced, and therefore, the external load is decreased. When the outdoor temperature is high, on the other hand, a great deal of work must be supplied to the air-conditioning system to cool the interior of the room, and therefore, the external load is increased. In a heating operation to warm the interior of the room, the external load is increased when the outdoor temperature is low, and the external load is decreased when the outdoor temperature is high.

As previously described in connection with FIG. 2, the air-conditioning system has a refrigerant flow in which the gas-phase refrigerant separated by the phase separator is introduced into the second compression part 120 while the gas-phase refrigerant separated by the phase separator is mixed with the refrigerant having passed through the first compression part 110, when the external load is large, i.e., in severely cold regions or tropical regions. Of course, when the external load is small, either the first compression part or the second compression part may be operated.

In FIG. 6, a rectangular shape drawn according to the external load and the outdoor temperature means compression work to be applied to the compressor from the outside. Rectangle A means compression work applied to the compressor when the first compression part is operated. Rectangles in Section B mean compression works variably supplied to the second compression part depending upon the external load.

When the external load, i.e., the total compression work, to be applied to the compressor is W1 + W2, the compression work of W1 is supplied to the first compression part 110, and the compression work of W2 is supplied to the second compression part 120.

When the external load to be applied to the air-conditioning system is within the W1 section, only the first compression part is operated in the air-conditioning system. Of course, the first compression part may be variable depending upon the external load.

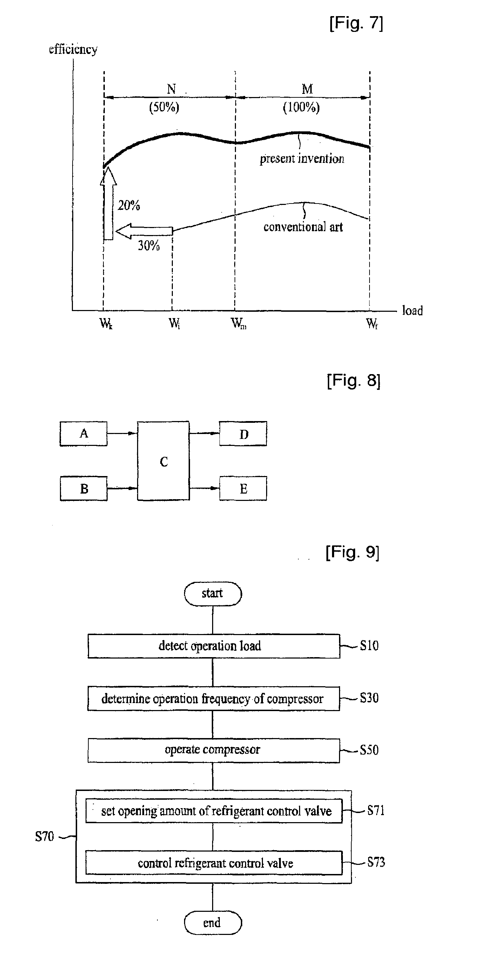

Hereinafter, the operational efficiency of the compressor according to the present invention will be described with reference to FIGs. 2 and 7.

Generally, principal factors to determine the efficiency of the compressor are the capacity of the compressor and energy consumption rate. Here, the capacity of the compressor is determined, during the manufacture of the compressor, such that the compressor is suitable for a corresponding air-conditioning system. Consequently, although the compressor has the same capacity as a conventional compressor, it is necessary to reduce energy consumption such that the operating range of the air-conditioning system is extended.

As shown in the drawing, it was possible for a conventional air-conditioning system to be operated only in a region in which the external load has a range of Wi to Wf. In other words, the operating range of the conventional air-conditioning system is determined depending upon only the capacity of the compressor.

However, it is possible for the air-conditioning system according to this embodiment to be operated in a region in which the external load has a range of Wk to Wf. In the air-conditioning system, the gas-phase refrigerant is supplied to the second compression part 120 together with the refrigerant compressed by the first compression part 110. Consequently, compression work applied to the compressor is decreased, and therefore, energy consumption is decreased, whereby the total efficiency of the air-conditioning system is increased although the air-conditioning system has the same output as a conventional air-conditioning system. As a result, the operating range of the air-conditioning system is further extended although the compressor has the same capacity as a conventional compressor.

Specifically, it can be seen that, when the ratio in volume of the first cylinder 111 to the second cylinder 121 (M:N) is 100:50, the operating range of the air-conditioning system according to the present invention is increased 30% more than that of the conventional air-conditioning system, and the operational efficiency of the air-conditioning system according to the present invention is increased 20% more than that of the conventional air-conditioning system.

From the viewpoint of coefficient of performance (COP) of the air-conditioning system, it can be seen that the compression work necessary to acquire the same cooling capacity, i.e., power consumption, is decreased, and therefore, the COP of the air-conditioning system is increased. Of course, when the same compression work as the conventional air-conditioning system is supplied to the air-conditioning system according to the present invention, the COP of the air-conditioning system is increased, and therefore, the cooling efficiency of the air-conditioning system is increased.

Theoretically, the COP of the air-conditioning system is represented by a ratio of heat capacity absorbed by the evaporator to heat capacity of the compression work. Practically, the heat capacity of the compression work means the actual power consumption of the air-conditioning system, whereas the heat capacity absorbed by the evaporator means the cooling capacity of the air-conditioning system.

In the air-conditioning system according to the present invention, the compressor is driven using the gas-phase refrigerant separated by the phase separator. Consequently, the operational efficiency of the air-conditioning system is increased, and the operating range of the air-conditioning system is extended. Furthermore, as the operating range of the air-conditioning system is extended, it is possible for the air-conditioning system to be operated even in severely cold regions or tropical regions.

Hereinafter, an embodiment of controlling method for the air-conditioning system according to the present invention will be described in detail with reference to FIGs. 8 and 9.

The air-conditioning system according to the present invention detects data necessary to operate the air-conditioning system, and simultaneously or selectively controls the amount of refrigerant introduced into the phase separator and the amount of refrigerant discharged from the phase separator based on the detected data.

The data may be operation load of the air-conditioning system necessary to operate the air-conditioning system or data related to the refrigerant. Hereinafter, a process for controlling the air-conditioning system based on the operation load of the air-conditioning system will be described.

When a user selects operation mode of the air-conditioning system, the control unit C detects operation load of the air-conditioning system (S10).

The operation mode of the air-conditioning system may be classified into several levels depending upon desired degree of cooling/heating. For example, the operation mode of the air-conditioning system may be set to several levels depending upon the difference between indoor temperature and predetermined temperature.

The operation load of the air-conditioning system is determined by several factors including indoor temperature, outdoor temperature, the length of the refrigerant pipe, and the number of the indoor units in operation as well as the selected operation mode.

Specifically, the control unit C is connected to an input unit A for allowing the user to input the operation mode of the air-conditioning system. The control unit C transmits and receives information to and from a temperature sensor B for measuring the outdoor temperature and the indoor temperature.

When the operation load of the air-conditioning system is detected, the control unit C determines an operation frequency of the compressor corresponding to the operation load of the air-conditioning system, i.e., a first output value D (S30). Here, the operation frequency of the compressor is represented by a function of respective variables of the operation load of the air-conditioning system. The function is a result that is experimentally acquired in advance, and is stored in the control unit C.

The control unit according to the present invention determines the operation frequency of the compressor in consideration of the capacity of the indoor unit, the outdoor temperature, the indoor temperature, the difference between the indoor temperature and the predetermined temperature, the length of the refrigerant pipe, and the number of the indoor units in operation among the factors affecting the operation frequency of the compressor.

When the difference between the indoor temperature and the predetermined temperature is large, the operation frequency of the compressor is increased. When the difference between the outdoor temperature and the indoor temperature is large, the operation frequency of the compressor is increased. Also, as the number of the indoor units in operation is increased, the operation frequency of the compressor is increased. In addition, the length of the refrigerant pipe affects the operation frequency of the compressor. Furthermore, compensation coefficients to determine the operation frequency of the compressor may be experimentally acquired, in consideration of the affection of these variables, to determine the operation frequency of the compressor.

When the operation frequency of the compressor is determined, the control unit C controls the compressor to be operated at the determined operation frequency (S50). After that, the control unit C controls the amount of the gas-phase refrigerant introduced into the intermediate refrigerant pipe (S70).

Specifically, the control unit C determines the opening amount of the refrigerant control valve corresponding to the operation frequency of the compressor, i.e., a second output value E (S71). Here, relations between the operation frequency of the compressor and the opening amount of the refrigerant control valve are previously stored in the control unit C. The relations between the operation frequency of the compressor and the opening amount of the refrigerant control valve are results that are experimentally acquired in advance.

For example, control unit C variously adjusts the opening degree of the refrigerant control valve at specific operation frequencies of the compressor, and calculates the cooling capacity of the air-conditioning system depending upon the opening degree of the refrigerant control valve. The opening degree of the refrigerant control valve at which the highest cooling capacity is provided at the specific operation frequencies of the compressor may be selected as the opening degree of the refrigerant control valve corresponding to the operation frequency of the compressor.

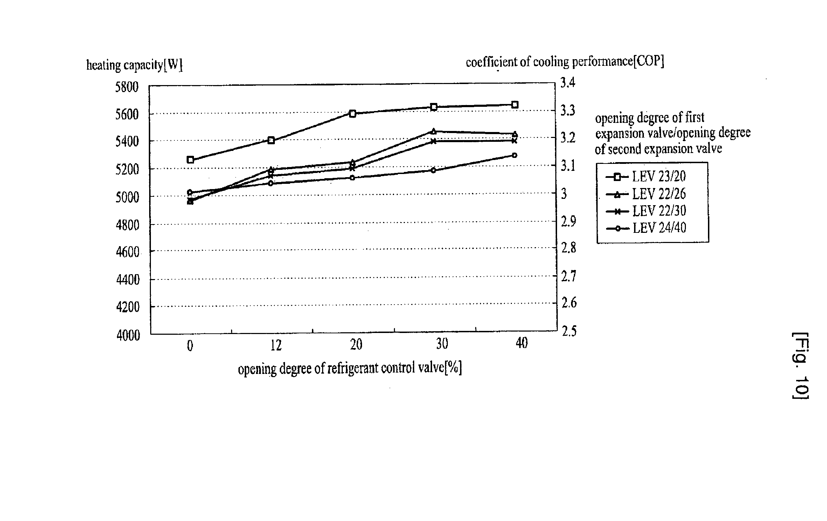

As an example, a process for setting the opening degree of the refrigerant control valve according to the operation frequency of the compressor will be described with reference to FIG. 10.

FIG. 10 is a graph illustrating the performance of the air-conditioning system when the opening degree of the refrigerant control valve is successively changed while the opening degrees of the first expansion valve and the second expansion valve are uniformly maintained at specific operation frequencies of the compressor.

It can be seen from the graph of FIG. 10 that, when the opening degree of the first expansion valve is 22 %, the opening degree of the second expansion valve is 20 %, and the opening degree of the refrigerant control valve is 40 %, the heating capacity and the cooling performance of the air-conditioning system are the highest.

It can be also seen from the graph of FIG. 10 that, when the opening degree of the first expansion valve is 22 %, the opening degree of the second expansion valve is 26 %, and the opening degree of the refrigerant control valve is 30 %, the heating capacity and the cooling performance of the air-conditioning system are the highest. It can be also seen from the graph of FIG. 10 that, when the opening degree of the first expansion valve is 22 %, the opening degree of the second expansion valve is 30 %, and the opening degree of the refrigerant control valve is 40 %, the heating capacity and the cooling performance of the air-conditioning system are the highest. It can be also seen from the graph of FIG. 10 that, when the opening degree of the first expansion valve is 24 %, the opening degree of the second expansion valve is 40 %, and the opening degree of the refrigerant control valve is 40 %, the heating capacity and the cooling performance of the air-conditioning system are the highest. From the results shown in FIG. 10, it can be seen that the heating capacity and the cooling performance of the air-conditioning system are the highest when the opening degree of refrigerant control valve is approximately 40 % at the specific operating frequencies of the compressor.

The operation frequency of the compressor and the opening amount of the refrigerant control valve correspond to each other in a one-to-one correspondence fashion through the above-described method. The information is stored in the control unit.

When the opening amount of the refrigerant control valve is determined, the control unit controls the refrigerant control valve such that the refrigerant control valve is opened by the determined opening amount (S73).

When the user changes the operation mode, on the other hand, the control unit detects the operation load of the air-conditioning system and adjusts the opening degree of the refrigerant control valve based on the detected operation load. Consequently, it is possible for the air-conditioning system according to the present invention to control the amount of the gas-phase refrigerant introduced into the compressor depending upon the operation load of the air-conditioning system, whereby the performance of the air-conditioning system is optimized.

When any one of the principal factors is changed, the control unit determines a new operation frequency of the compressor in consideration of the changed factor, and newly adjusts the opening degree of the refrigerant control valve based on the determined operation frequency of the compressor. In other words, when any one of the principal factors is changed, the above-described process is repeatedly performed to find the optimal operation state of the air-conditioning system.

Of course, the compressor may be operated while the operation frequency of the compressor is not changed after it is set based on the initial operation load of the air-conditioning system, and the opening amount of the refrigerant control valve may be changed depending upon the variable amount of the operation load of the air-conditioning system, for example, the indoor temperature and the outdoor temperature.

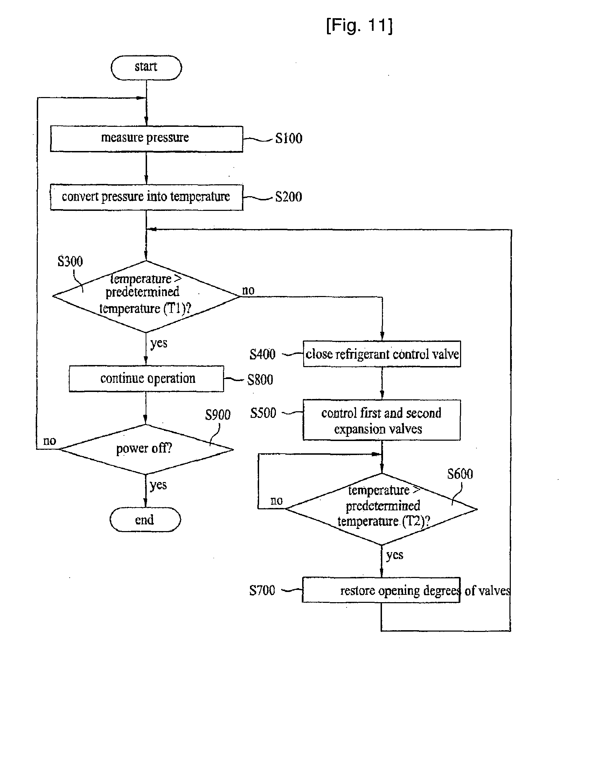

Hereinafter, another embodiment of controlling method for the air-conditioning system according to the present invention will be described in detail with reference to FIGs. 2 and 11.

The air-conditioning system according to the present invention controls the amount of the refrigerant flowing through the refrigerant pipe connected to the phase separator based on data related to the refrigerant. Specifically, a process for controlling the amount of the refrigerant may include a step of controlling the first expansion valve mounted on the mixed refrigerant pipe through which the refrigerant is introduced into the phase separator, a step of controlling the refrigerant control valve mounted on the first refrigerant pipe through which the gas-phase refrigerant separated by the phase separator flows, and a step of controlling the second expansion valve mounted on the second refrigerant pipe through which the liquid-phase refrigerant separated by the phase separator is introduced into the evaporator.

First, when the operation of the air-conditioning system is initiated, and the refrigerant discharged from the condenser 300 is stored in the phase separator 500, a measuring sensor (not shown) mounted in the first refrigerant pipe connection part 510 measures the pressure of the refrigerant (S100). Subsequently, the control unit converts the measured pressure into temperature to obtain the temperature of the refrigerant (S200).

Of course, the measuring sensor may be mounted in at least one of the refrigerant pipes connected to the phase separator. Also, the measuring sensor may directly measure the temperature of the gas-phase refrigerant.

Subsequently, the control unit determines whether the temperature of the refrigerant in the phase separator 500 exceeds a first predetermined temperature T1 (S300). The first predetermined temperature T1 is previously stored in the control unit. Also, the first predetermined temperature T1 of the refrigerant is a value set through experiments. The first predetermined temperature T1 means the temperature of the refrigerant when the liquid-phase refrigerant is discharged through the first refrigerant pipe connection part 510 according to the operation condition depending upon the temperature of the outdoor air. Subsequently, the control unit compares the converted refrigerant temperature with the predetermined temperature T1.

When it is determined, as a result of the comparison, that the converted refrigerant temperature does not exceed the predetermined temperature T1, the control unit completely closes the refrigerant control valve 730 through which the gas-phase refrigerant is supplied to the second compression part 120 of the compressor 100 (S400). After that, the control unit adjusts the opening degrees op the first expansion valve 410 and the second expansion valve 420 (S500) to lower the level of the liquid-phase refrigerant in the phase separator 500 and increase the amount of the gas-phase refrigerant. For example, the control unit increases the opening degree of the second expansion valve 420 such that a relatively large amount of the liquid-phase refrigerant is discharged from the phase separator.

Consequently, the contact between the liquid-phase refrigerant and the lowermost end of the first refrigerant pipe connection part 510 is prevented, and the introduction of the liquid-phase refrigerant into the compressor 100 is prevented, whereby the performance of the compressor 100 is prevented from decreasing.

When it is determined that the measured refrigerant temperature exceeds a second predetermined temperature T2 (S600), the control unit stops controlling the level of the refrigerant and readjusts the opening amounts of the respective valves such that the valves have the opening amounts just before the valves are controlled (S700). In other words, the control unit opens the refrigerant control valve 730 by a predetermined opening amount, and closes the first and second expansion valve 410 and 420 by predetermined opening amounts, respectively.

When it is determined at S300 that the temperature of the refrigerant in the phase separator 500 exceeds the predetermined temperature T1, the operation of the air-conditioning system is performed continuously (S800). After that, when a power off command is inputted by the user (S900), the operation is stopped.

The multi-stage compression of the air-conditioning system is accomplished through the above-described process, and the performance of the compressor is normally maintained.

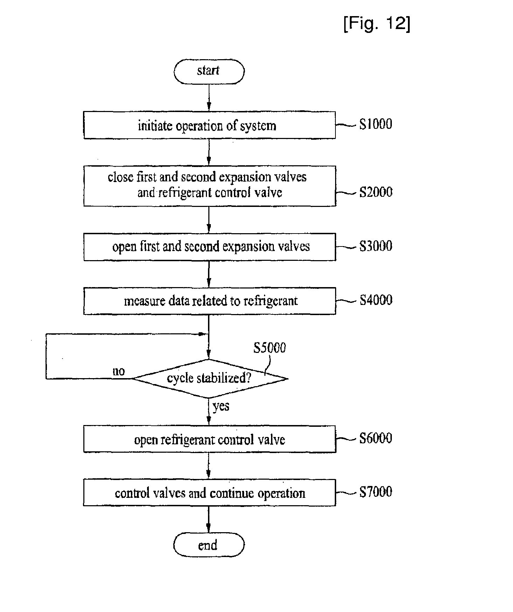

Hereinafter, a further embodiment of controlling method for the air-conditioning system according to the present invention will be described in detail with reference to FIGs. 2 and 12.

First, when the operation of the air-conditioning system is initiated, the compressor 100 is driven (S1000).

At this time, the liquid-phase refrigerant may rise due to the abrupt change of the pressure in the phase separator 500 with the result that the liquid-phase refrigerant may be introduced into the first refrigerant pipe connection part. In order to prevent the occurrence of this phenomenon, therefore, all the valves connected to the phase separator are closed (S2000).

Subsequently, a drive signal of 100/500 pulses is inputted to the first expansion valve 410, and a drive signal of 100/500 pulses is inputted to the second expansion valve 420 such that the first and second expansion valves 410 and 420 are opened by predetermined amounts V1 and V2, respectively (S3000). These opening degrees of the first and second expansion valves 410 and 420 are maintained until a refrigeration cycle is stabilized. When a drive signal of 500 pulses is inputted to the first expansion valve 410 and the second expansion valve 420, the maximum output is accomplished through the first and second expansion valves 410 and 420. Accordingly, inputting a drive signal of 100/500 pulses means inputting a drive signal of 100 pulses with respect to a drive signal of maximum 500 pulses. Generally, the expansion valves are not driven by a drive signal of less than 100 pulses. Also, the refrigerant control valve 730 remains opened. The reason why the refrigerant control valve 730 is not opened is that it takes a greater deal of time to stabilize the refrigeration cycle when the refrigerant control valve 730 is opened, which has been experimentally proven.

At this time, a measuring sensor (not shown) mounted at the outlet side of the compressor 100 measures data related to the refrigerant, i.e., the temperature and the pressure of the refrigerant (S4000). When the measuring sensor is mounted at the outlet side of the compressor 100, it is possible to easily determine whether the refrigerant is suitable for the total operation load of the air-conditioning system.

Subsequently, the control unit compares the measured data with predetermined reference data to determine whether the refrigeration cycle of the air-conditioning system is stabilized (S5000). Preferably, the reference data related to the temperature or the pressure of the refrigerant is set to a value measured in a normal state in which the liquid-state refrigerant is not introduced from the phase separator.

When it is determined that the refrigeration cycle is stabilized, i.e., the measured data is within a range of the reference data, the control unit controls the refrigerant control valve 730 to be opened by a predetermined amount V3 such that the gas-phase refrigerant is supplied to the second compression part 120 of the compressor 100 (S6000).

Subsequently, the operation of the compressor is continued while the opening amounts of the valves are adjusted based on the amount of load depending upon the temperature of outdoor air such that the liquid-phase refrigerant is prevented from being introduced into the compressor and the compression work is minimized (S7000).

It will be apparent to those skilled in the art that various modifications and variations can be made in the present invention without departing from the scope of the invention. Thus, it is intended that the present invention cover the modifications and variations of this invention provided they come within the scope of the appended claims.

### Industrial Applicability

According to the present invention, the refrigerant compressed by the first compression part and the gas-phase refrigerant separated by the phase separator are mixed and compressed in the second compression part. Consequently, the present invention provides the effect of decreasing compression work required in the compressor, thereby relatively increasing the operating range of the air-conditioning system with the result that the air-conditioning system may be used even in severely cold regions. In addition, the amount of the refrigerant introduced into the phase separator and the amount of the refrigerant discharged from the phase separator are simultaneously or selectively controlled depending upon the state of the refrigerant or the load of the air-conditioning system. Consequently, the present invention provides the effect of efficiently operating the air-conditioning system.

## Claims

1. An air-conditioning system comprising:
a phase separator (500) for separating a flowing refrigerant into a gas-phase refrigerant and a liquid-phase refrigerant;
an evaporator (600) for evaporating the liquid-phase refrigerant separated by the phase separator;
a compressor (100) having a first compression part (110) into which the refrigerant having passed through the evaporator is introduced and a second compression part (120) into which both the gas-phase refrigerant separated by the phase separator and the refrigerant having passed through the first compression part are introduced;
a control unit (c) for simultaneously or selectively controlling the amount of the refrigerant introduced into the phase separator and the amount of the refrigerant discharged from the phase separator;
a first expansion valve (410) for controlling the amount of the refrigerant introduced into the phase separator; and
a second expansion valve (420) for controlling the amount of the liquid-phase refrigerant discharged from the phase separator and introduced into the evaporator;
**characterised in that** the air-conditioning system further comprises:
a refrigerant control valve (730) for controlling the amount of the gas-phase refrigerant discharged from the phase separator and introduced into the second compression part,
wherein the control unit controls all the valves to prevent the introduction of the liquid-phase refrigerant into the compressor;
wherein the control unit closes all the valves to prevent the introduction of the liquid-phase refrigerant into the compressor when the operation of the air-conditioning system is initiated; and
wherein the control unit controls the opening amount of the refrigerant control valve when the refrigeration cycles is stabilized.

2. The air-conditioning system according to claim 1, wherein the control unit (c) controls the amount of the gas-phase refrigerant introduced into the second compression part (120) depending upon operation load of the system.

3. The air-conditioning system according to claim 2, wherein the control unit (c) controls the opening amount of the refrigerant control valve (730) based on a frequency of the compressor (100) determined depending upon the operation load of the system.

4. The air-conditioning system according to claim 3, wherein the operation load of the system is determined depending upon factors including operation mode set by a user, outdoor temperature and indoor temperature.

5. The air-conditioning system according to claim 4, further comprising:
a temperature sensor for measuring the outdoor temperature and the indoor temperature,
a measuring sensor for measuring data related to the state of the refrigerant, which is provided on a first refrigerant pipe (710) through which the gas-phase refrigerant separated by the phase separator (500) flows.

6. The air-conditioning system according to claim 5, wherein
the measuring sensor includes a pressure sensor mounted in at least one of refrigerant pipes connected to the phase separator (500) and/or a temperature sensor for measuring the temperature of the gas-phase refrigerant, and
the measuring sensor is provided at an outlet port of the compressor.

7. The air-conditioning system according to claim 6, wherein the control unit (c) converts the pressure data measured by the pressure sensor into temperature data corresponding to the pressure data and controls the first expansion valve (410), the second expansion valve (420), and the refrigerant control valve (730)based on data related to the state of the refrigerant set depending upon the outdoor temperature and the data measured by the measuring sensor.

8. A controlling method for an air-conditioning system comprising:
detecting data necessary for the operation of the system;
simultaneously or selectively controlling the amount of refrigerant introduced into a phase separator and the amount of refrigerant discharged from the phase separator based on the detected data in order to prevent the introduction of the liquid-phase refrigerant into the compressor;
when the operation of the air-conditioning system is initialising:
closing a first expansion valve (410) mounted on a mixed refrigerant pipe (750) through which the refrigerant is introduced into the phase separator (500) for controlling the amount of the refrigerant introduced into the phase separator;
closing a second expansion valve (420) mounted on a second refrigerant pipe (720) through which a liquid-phase refrigerant separated by the phase separator flows to an evaporator (600) for controlling the amount of the liquid-phase refrigerant discharged from the phase separator and introduced into the evaporator; and
closing a refrigerant control valve (730) mounted on a first refrigerant pipe (710) through which a gas-phase refrigerant separated by the phase separator flows for controlling the amount of the gas-phase refrigerant discharged from the phase separator and introduced into compressor (100);
the method further comprising controlling the opening amount of the refrigerant control valve when the refrigeration cycle is stabilized.

9. The controlling method according to claim 8, wherein
the data includes operation load of the system, and the controlling method further comprises:
determining an operation frequency of a compressor (100) corresponding to the operation load of the system; and
operating the compressor at the determined operation frequency.

10. The controlling method according to claim 8, wherein
the data includes data related to the state of the refrigerant, and the controlling method further comprises:
comparing the measured data with data related to the state of the refrigerant previously set depending upon outdoor temperature; and
controlling valves provided on refrigerant pipes connected to the phase separator (600) based on the measured data and the set data.

11. The controlling method according to claim 8, wherein the data includes the temperature of the refrigerant, and the step of controlling the valves includes
when the temperature of the refrigerant does not exceed a first predetermined temperature previously stored in the control unit (c), closing the refrigerant control valve (730) through which a gas-phase refrigerant is discharged from the phase separator (500), and opening the first expansion valve (410) through which the refrigerant is introduced into the phase separator and the second expansion valve (420) through which a liquid-phase refrigerant is discharged from the phase separator and introduced into an evaporator (600) by predetermined opening degrees, respectively.

12. The controlling method according to claim 11, wherein the step of controlling the valves includes
when the temperature of the refrigerant exceeds a second predetermined temperature previously stored in the control unit (c), resetting the opening degrees of the refrigerant control valve (730), the first expansion valve (410), and the second expansion valve (420) to be the opening degrees just before the valves are controlled.

13. The controlling method according to claim 8, wherein the first expansion valve (410) and the second expansion valve (420) are opened to predetermined opening degrees, respectively, until the measured data is within a range of reference data of the stabilized system after all the valves are closed.

14. The controlling method according to claim 13, wherein, when the measured data is within the range of reference data, the refrigerant control valve (730) is opened to a predetermined opening degree.

15. The controlling method according to claim 14, wherein, after the refrigerant control valve (730) is opened to the predetermined opening degree, the opening degrees of the first expansion valve (410), the second expansion valve (420), and the refrigerant control valve are controlled depending upon outdoor temperature.

## Patentansprüche

1. Klimaanlagensystem, welches Folgendes umfasst:
einen Phasentrenner (500) zum Trennen eines strömenden Kältemittels in ein Kältemittel in der Gasphase und ein Kältemittel in der Flüssigphase;
einen Verdampfer (600) zum Verdampfen des Flüssigphase-Kältemittels, welcheds mit Hilfe des Phasentrenners getrennt worden ist;
einen Verdichter (100) mit einem ersten Verdichtungsabschnitt (110), in welchen das durch den Verdampfer gelangte Kältemittel eingeleitet wird, sowie mit einem zweiten Verdichtungsabschnitt (120), in welchen sowohl das Gasphase-Kältemittel, welches mit Hilfe des Phasentrenners getrennt worden ist, als auch das Kältemittel, welches durch den ersten Verdichtungsabschnitt hindurchgeströmt ist, eingeleitet werden;
eine Steuereinheit (c) zur gleichzeitigen oder selektiven Steuerung der Menge an Kältemittel, welches in den Phasentrenner eingeleitet wird, sowie der Menge an Kältemittel, welches aus dem Phasentrenner ausfließt;
ein erstes Expansionsventil (410) zur Steuerung der Menge an Kältemittel, welches in den Phasentrenner eingeleitet wird; und
ein zweites Expansionsventil (420) zur Steuerung der Menge an Flüssigphase-Kältemittel, welches aus dem Phasentrenner ausfließt und in den Verdampfer eingeleitet wird;
**dadurch gekennzeichnet, dass** das Klimaanlagensystem des Weiteren Folgendes umfasst:
ein Regelventil (730) für das Kältemittel zur Regelung bzw. Steuerung der Menge an Gasphase-Kältemittel, welches aus dem Phasentrenner ausfließt und in den zweiten Verdichtungsabschnitt eingeleitet wird,
wobei die Steuereinheit alle Ventile steuert, um zu verhindern, dass das Flüssigphase-Kältemittel in den Verdichter eingeleitet wird;
wobei die Steuereinheit alle Ventile schließt, um die Einleitung des Flüssigphase-Kältemittels in den Verdichter zu verhindern, wenn der Betrieb des Klimaanlagensystems anläuft; und
wobei die Steuereinheit das Öffnungsmaß des Kältemittel-Steuerventils steuert, wenn der Kühlkreislauf stabilisiert ist.

2. Klimaanlagensystem nach Anspruch 1, wobei die Steuereinheit (c) die Menge an Gasphase-Kältemittel, welches in den zweiten Verdichtungsabschnitt (120) eingeleitet wird, abhängig von der Betriebslast des Systems steuert.

3. Klimaanlagensystem nach Anspruch 2, wobei die Steuereinheit das Öffnungsmaß des Kältemittel-Steuerventils (730) basierend auf einer Frequenz des Verdichters (100), welche abhängig von der Betriebslast des Systems bestimmt wird, steuert.

4. Klimaanlagensystem nach Anspruch 3, wobei die Betriebslast des Systems basierend auf Faktoren, welche einen vom Benutzer festgesetzten Betriebsmodus, Außentemperatur und Innentemperatur einschließen, bestimmt wird.

5. Klimaanlagensystem nach Anspruch 4, welches des Weiteren Folgendes umfasst:
einen Temperatursensor zum Messen der Außentemperatur sowie der Innentemperatur;
einen Messfühler zum Messen von Daten, welche den Zustand des Kältemittels betreffen, wobei der Messfühler auf einer ersten Kältemittel-Leitung (710) bereitgestellt ist, durch welche das mit Hilfe des Phasentrenners (500) getrennte Gasphase-Kältemittel fließt.

6. Klimaanalgensystem nach Anspruch 5, wobei
der Messfühler einen Drucksensor, welcher in zumindest einer der Kältemittel-Leitungen, welche mit dem Phasentrenner (500) verbunden sind, angebracht ist, und/oder einen Temperatursensor zum Messen der Temperatur des Gasphase-Kältemittels einschließt; und
der Messfühler an einer Auslassöffnung des Verdichters bereitgestellt ist.

7. Klimaanlagensystem nach Anspruch 6, wobei die Steuereinheit (c) die Druckdaten, welche von dem Drucksensor gemessen werden, in Temperaturdaten umwandelt, welche den Druckdaten entsprechen, und das erste Expansionsventil (410), das zweite Expansionsventil (420) und das Kältemittel-Steuerventil (730) basierend auf Daten steuert, welche den Zustand des Kältemittels, der abhängig von der Außentemperatur und den mit Hilfe des Messfühlers gemessenen Daten eingestellt wird, betreffen.

8. Steuerverfahren für ein Klimaanlagensystem, welches die folgenden Schritte umfasst:
Erfassung von Daten, welche für den Betrieb des Systems erforderlich sind;
gleichzeitige oder selektive Steuerung der Menge an Kältemittel, welches in einen Phasentrenner eingeleitet wird, sowie der Menge an Kältemittel, welches aus dem Phasentrenner basierend auf den erfassten Daten ausfließt, um die Einleitung des Flüssigphase-Kältemittels in den Verdichter zu verhindern;
wenn der Betrieb des Klimanlagensystems anläuft:
Schließen eines ersten Expansionsventils (410), welches auf einer Kältemittelgemisch-Leitung (750) angebracht ist, durch welche das Kältemittel in den Phasentrenner (500) eingeleitet wird, um die Menge an Kältemittel zu steuern, welches in den Phasentrenner eingeleitet wird;
Schließen eines zweiten Expansionsventils (420), welches auf einer zweiten Kältemittel-Leitung (720) angebracht ist, durch welche ein Flüssigphase-Kältemittel, das mit Hilfe des Phasentrenners getrennt worden ist, zu einem Verdampfer (600) fließt, um die Menge an Flüssigphase-Kältemittel, welches aus dem Phasentrenner ausfließt und in den Verdichter (100) eingeleitet wird, zu steuern; und
Schließen eines Kältemittel-Steuerventils (730), welches auf einer ersten Kältemittel-Leitung (710) angebracht ist, durch welche ein mit Hilfe des Phasentrenners getrenntes Gasphase-Kältemittel fließt, um die Menge an Gasphase-Kältemittel, welches aus dem Phasentrenner ausfließt und in den Verdichter (100) eingeleitet wird, zu steuern;
wobei das Verfahren des Weiteren den Schritt der Steuerung des Öffnungsmaßes des Kältemittel-Steuerventils umfasst, wenn der Kühlkreislauf stabilisiert ist.

9. Steuerverfahren nach Anspruch 8, wobei
die Daten die Betriebslast des Systems einschließen, und wobei das Steuerverfahren des Weiteren die folgenden Schritte umfasst:
Bestimmung einer Betriebsfrequenz eines Verdichters (100), welche der Betriebslast des Systems entspricht; und
Betrieb des Verdichters mit der festgelegten Betriebsfrequenz.

10. Steuerverfahren nach Anspruch 8, wobei
die Daten Daten einschließen, welche den Zustand des Kältemittels betreffen, und wobei das Steuerverfahren des Weiteren die folgenden Schritte umfasst:
Vergleich der gemessenen Daten mit Daten, welche den Zustand des Kältemittels, welcher zuvor abhängig von der Außentemperatur festgelegt worden ist, betreffen; und
Steuerung von Ventilen, welche auf mit dem Phasentrenner (600) verbundenen Kältemittel-Leitungen bereitgestellt sind, basierend auf den Messdaten und den festgelegten Daten..

11. Steuerverfahren nach Anspruch 8, wobei
die Daten die Temperatur des Kältemittels einschließen, und wobei der Schritt der Steuerung der Ventile des Weiteren Folgendes umfasst:
wenn die Temperatur des Kältemittels eine erste festgelegte Temperatur, welche zuvor in der Steuereinheit (c) gespeichert wurde, nicht übersteigt, Schließen des Kältemittel-Steuerventils (730), durch welches ein Gasphase-Kältemittel aus dem Phasentrenner (500) ausfließt, und Öffnen des ersten Expansionsventils (410), durch welches das Kältemittel in den Phasentrenner eingeleitet wird, und des zweiten Expansionsventils (420), durch welches ein Flüssigphase-Kältemittel aus dem Phasentrenner ausfließt und in einen Verdampfer (600) eingeleitet wird, jeweils um einen vorher festgelegten Öffnungswinkel.

12. Steuerverfahren nach Anspruch 11, wobei der Schritt der Steuerung der Ventile Folgendes umfasst:
wenn die Temperatur des Kältemittels eine zweite zuvor in der Steuereinheit (c) gespeicherte vorher festgelegte Temperatur überschreitet, Rücksetzung der Öffnungswinkel des Kältemittel-Steuerventils (730), des ersten Expansionsventils (410) und des zweiten Expansionsventils (420) auf die Öffnungswinkel kurz bevor die Ventile gesteuert werden.

13. Steuerverfahren nach Anspruch 8, wobei das erste Expansionsventil (410) und das zweite Expansionsventil (420) jeweils auf festgelegte Öffnungswinkel geöffnet werden, bis die Messdaten innerhalb eines Referenzdatenbereichs des stabilisierten Systems liegen, nachdem alle Ventile geschlossen worden sind.

14. Steuerverfahren nach Anspruch 13, wobei dann, wenn die Messdaten innerhalb des Referenzdatenbereichs liegen, das Kältemittel-Steuerventil (730) auf einen vorher festgelegten Öffnungswinkel geöffnet wird.

15. Steuerverfahren nach Anspruch 14, wobei nach Öffnung des Kältemittel-Steuerventils (730) auf den vorher festgelegten Öffnungswinkel die Öffnungswinkel des ersten Expansionsventils (410), des zweiten Expansionsventils (420) und des Kältemittel-Steuerventils abhängig von der Außentemperatur gesteuert werden.

## Revendications

1. Système de climatisation comprenant :
un séparateur de phases (500) destiné à séparer un fluide frigorigène circulant en un fluide frigorigène en phase gazeuse et un fluide frigorigène en phase liquide ;
un évaporateur (600) destiné à évaporer le fluide frigorigène en phase liquide séparé par le séparateur de phases ;
un compresseur (100) ayant une première partie de compression (110) dans laquelle le fluide frigorigène ayant passé à travers l'évaporateur est introduit et une deuxième partie de compression (120) dans laquelle à la fois le fluide frigorigène en phase gazeuse séparé par le séparateur de phases et le fluide frigorigène ayant passé à travers la première partie de compression sont introduits ;
une unité de commande (C) destinée à commander simultanément ou sélectivement la quantité du fluide frigorigène introduite dans le séparateur de phases et la quantité du fluide frigorigène déchargée à partir du séparateur de phases ;
une première soupape de détente (410) destinée à commander la quantité du fluide frigorigène introduite dans le séparateur de phases ; et
une deuxième soupape de détente (420) destinée à commander la quantité du fluide frigorigène en phase liquide déchargée à partir du séparateur de phases et introduite dans l'évaporateur ;
**caractérisé en ce que** le système de climatisation comprend en outre :
une soupape de commande de fluide frigorigène (730) destinée à commander la quantité du fluide frigorigène en phase gazeuse déchargée à partir du séparateur de phases et introduite dans la deuxième partie de compression,
dans lequel l'unité de commande commande toutes les soupapes pour empêcher l'introduction du fluide frigorigène en phase liquide dans le compresseur ;
dans lequel l'unité de commande ferme toutes les soupapes pour empêcher l'introduction du fluide frigorigène en phase liquide dans le compresseur lorsque le fonctionnement du système de climatisation est initié ; et
dans lequel l'unité de commande commande la quantité d'ouverture de la soupape de commande de fluide frigorigène lorsque le cycle de réfrigération est stabilisé.

2. Système de climatisation selon la revendication 1, dans lequel l'unité de commande (c) commande la quantité du fluide frigorigène en phase gazeuse introduite dans la deuxième partie de compression (120) en fonction de la charge de fonctionnement du système.

3. Système de climatisation selon la revendication 2, dans lequel l'unité de commande (C) commande la quantité d'ouverture de la soupape de commande de fluide frigorigène (730) sur la base d'une fréquence du compresseur (100) déterminée en fonction de la charge de fonctionnement du système.

4. Système de climatisation selon la revendication 3, dans lequel la charge de fonctionnement du système est déterminée en fonction des facteurs comportant un mode de fonctionnement défini par un utilisateur, une température extérieure et une température intérieure.

5. Système de climatisation selon la revendication 4, comprenant en outre :
un capteur de température destiné à mesurer la température extérieure et la température intérieure,
un capteur de mesure destiné à mesurer les données relatives à l'état du fluide frigorigène, qui est prévu sur un premier serpentin de réfrigération (710) à travers lequel le fluide frigorigène en phase gazeuse séparé par le séparateur de phases (500) circule.

6. Système de climatisation selon la revendication 5, dans lequel
le capteur de mesure comporte un capteur de pression monté dans au moins l'un des serpentins de réfrigération raccordés au séparateur de phases (500) et/ou un capteur de température destiné à mesurer la température du fluide frigorigène en phase gazeuse, et
le capteur de mesure est prévu au niveau d'un orifice de sortie du compresseur.

7. Système de climatisation selon la revendication 6, dans lequel l'unité de commande (c) convertit les données de pression mesurées par le capteur de pression en données de température correspondant aux données de pression et commande la première soupape de détente (410), la deuxième soupape de détente (420), et la soupape de commande de fluide frigorigène (730) sur la base des données relatives à l'état du fluide frigorigène définies en fonction de la température extérieure et des données mesurées par le capteur de mesure.

8. Procédé de commande pour un système de climatisation comprenant :
la détection des données nécessaires pour le fonctionnement du système ;
la commande de manière simultanée ou sélective de la quantité de fluide frigorigène introduite dans un séparateur de phases et de la quantité de fluide frigorigène déchargée à partir du séparateur de phases sur la base des données détectées afin d'empêcher l'introduction du fluide frigorigène en phase liquide dans le compresseur ;
lorsque le fonctionnement du système de climatisation commence :
la fermeture d'une première soupape de détente (410) montée sur un serpentin de réfrigération mixte (750) à travers lequel le fluide frigorigène est introduit dans le séparateur de phases (500) pour commander la quantité du fluide frigorigène introduite dans le séparateur de phases ;
la fermeture d'une deuxième soupape de détente (420) montée sur un deuxième serpentin de réfrigération (720) à travers lequel un fluide frigorigène en phase liquide séparé par le séparateur de phases circule vers un évaporateur (600) pour commander la quantité du fluide frigorigène en phase liquide déchargée à partir du séparateur de phases et introduite dans l'évaporateur; et
la fermeture d'une soupape de commande de fluide frigorigène (730) montée sur un premier serpentin de réfrigération (710) à travers lequel un fluide frigorigène en phase gazeuse séparé par le séparateur de phases circule pour commander la quantité du fluide frigorigène en phase gazeuse déchargée par le séparateur de phases et introduite dans le compresseur (100) ;
le procédé comprenant en outre la commande de la quantité d'ouverture de la soupape de commande de fluide frigorigène lorsque le cycle de réfrigération est stabilisé.

9. Procédé de commande selon la revendication 8, dans lequel
les données comportent une charge de fonctionnement du système, et le procédé de commande comprend en outre :
la détermination d'une fréquence de fonctionnement d'un compresseur (100) correspondant à la charge de fonctionnement du système ; et
le fonctionnement du compresseur à la fréquence de fonctionnement déterminée.

10. Procédé de commande selon la revendication 8, dans lequel
les données comportent des données relatives à l'état du fluide frigorigène, et le procédé de commande comprend en outre :
la comparaison des données mesurées aux données relatives à l'état du fluide frigorigène précédemment définies en fonction de la température extérieure ; et
la commande des soupapes prévues sur des serpentins de réfrigération raccordés au séparateur de phases (600) sur la base des données mesurées et des données définies.

11. Procédé de commande selon la revendication 8, dans lequel
les données comportent la température du fluide frigorigène, et l'étape de commande des soupapes comporte
lorsque la température du fluide frigorigène ne dépasse pas une première température prédéterminée précédemment stockée dans l'unité de commande (c), la fermeture de la soupape de commande de fluide frigorigène (730) à travers laquelle un fluide frigorigène en phase gazeuse est déchargé à partir du séparateur de phases (500), et l'ouverture de la première soupape de détente (410) à travers laquelle le fluide frigorigène est introduit dans le séparateur de phases et de la deuxième soupape de détente (420) à travers laquelle un fluide frigorigène en phase liquide est déchargé à partir du séparateur de phases et introduit dans un évaporateur (600) par des degrés d'ouverture prédéterminés, respectivement.

12. Procédé de commande selon la revendication 11, dans lequel l'étape de commande des soupapes comporte
lorsque la température du fluide frigorigène dépasse une deuxième température prédéterminée précédemment stockée dans l'unité de commande (c), la réinitialisation des degrés d'ouverture de la soupape de commande de fluide frigorigène (730), de la première soupape de détente (410), et de la deuxième soupape de détente (420) pour être les degrés d'ouverture juste avant que les soupapes ne soient commandées.

13. Procédé de commande selon la revendication 8, dans lequel la première soupape de détente (410) et la deuxième soupape de détente (420) sont ouvertes à des degrés d'ouverture prédéterminés, respectivement, jusqu'à ce que les données de mesure soient dans une plage de données de référence du système stabilisé après que toutes les soupapes sont fermées.

14. Procédé de commande selon la revendication 13, dans lequel, lorsque les données mesurées sont dans la plage de données de référence, la soupape de commande de fluide frigorigène (730) est ouverte à un degré d'ouverture prédéterminé.

15. Procédé de commande selon la revendication 14, dans lequel, après que la soupape de commande de fluide frigorigène (730) est ouverte au degré d'ouverture prédéterminé, les degrés d'ouverture de la première soupape de détente (410), de la deuxième soupape de détente (420), et de la soupape de commande de fluide frigorigène sont commandés en fonction de la température extérieure.
